# EUROPÄISCHE PATENTSCHRIFT

(11) **EP 2 256 032 B1**
(45) Veröffentlichungstag und Bekanntmachung des Hinweises auf die Patenterteilung: **17.02.2016**
(21) Anmeldenummer: 10163592.8
(22) Anmeldetag: 21.05.2010
(51) Int. Cl.: B64C 3/48

(54) **Aerodynamisches Bauteil mit verformbarer Außenhaut**
Aerodynamic component with deformable skin
Composant aérodynamique doté d'une paroi extérieure déformable

(30) Priorität: 25.05.2009 DE 102009026457
(43) Veröffentlichungstag der Anmeldung: 01.12.2010
(73) Patentinhaber: Deutsches Zentrum für Luft- und Raumfahrt e.V., 51147 Köln (DE)
(72) Erfinder: Heintze, Dr. Olaf, 38162 Cremlingen (DE); Monner, Dr.-Ing. Hans Peter, 38527 Meine (DE); Kintscher, Markus, 38114 Braunschweig (DE); Riemenschneider, Dr.-Ing. Johannes, 38106 Braunschweig (DE); Lorkowski, Dr.-Ing. Thomas, 82024 Taufkirchen (DE)
(74) Vertreter: REHBERG HÜPPE + PARTNER

(56) Entgegenhaltungen:
- EP-A1- 0 836 988
- EP-A1- 1 661 805
- WO-A1-85/00573
- DE-A1- 10 325 950
- US-A- 5 839 700

## Beschreibung

### TECHNISCHES GEBIET DER ERFINDUNG

Die Erfindung betrifft ein aerodynamisches Bauteil, insbesondere einen Tragflügel, eine Landeklappe, ein Höhen- oder Seitenleitwerk, gemäß dem Oberbegriff des Patentanspruchs 1.

### STAND DER TECHNIK

Eine Veränderung des Querschnitts einer von eine Außenhaut gebildeten Außenkontur eines aerodynamischen Bauteils wie beispielsweise eines Tragflügels kann beim Start und/oder bei einer Landung eines Flugkörpers von Interesse sein. Beispielsweise kann eine Flügelvorderkante bei einem Start und/oder der Landung abgesenkt werden, um einen Auftrieb zu erzeugen und/oder den Widerstand zu beeinflussen. Dies wird herkömmlich gelöst durch ausfahrbare Vorflügel oder Landeklappen. Die Betätigung derartiger Vorflügel und Landeklappen erfordert eine komplexe Betätigungsmechanik mit Gelenken, Hebeln, Zug- und Druckstößeln. Weiterhin ergeben sich bei ausfahrbaren Vorflügeln und Landeklappen Spalte im ausgefahrenen Zustand sowie Kanten in eingefahrenen Zustand. Die Spalte und Kanten führen zu einer unerwünschten Beeinflussung der Umströmung des aerodynamischen Bauteils. Beispielsweise wird die Spaltdurchströmung auch zur Beschleunigung der Strömung auf der Flügeloberseite und neben der Erzeugung von Auftrieb zur Verhinderung der Strömungsablösung benutzt. Allerdings hat diese Spaltdurchströmung auch unerwünschte Effekte. So wird durch sie beim Start und bei der Landung Lärm erzeugt, der einen signifikanten Anteil am Flugzeuggesamtlärm hat. Die für den Auftrieb notwendige Krümmungserhöhung mit einer vergrößerten Zirkulation um das aerodynamische Bauteil und damit mit erhöhtem Auftrieb sollte für lärmarme Start- und Landevorgänge spaltfrei erzeugt werden. Ein weiterer Nachteil der sich ausbildenden Spalte und Kanten ist, dass im Bereich der Spalte und Kanten eine laminare Umströmung des aerodynamischen Bauteils in eine turbulente Umströmung umschlagen kann, was zu einer signifikanten Erhöhung des Widerstands führen kann, was mit einer Erhöhung des Treibstoffverbrauchs und der Emission des Flugkörpers verbunden sein kann.

Bekannt ist auch der Einsatz einer sogenannten "Kippnase", wie diese beim Airbus A 380 Einsatz findet. Eine derartige Kippnase verschwenkt um eine Längsachse des aerodynamischen Bauelements gegenüber einem Hauptflügel des aerodynamischen Bauelementes mit einer Bewegung der Kippnase als starrer Körper.

Aus dem Stand der Technik bekannt sind auch auf einem sogenannten "Hornkonzept" beruhende Ansätze, bei welchen ein exzentrischer Antrieb von formvariablen Landeklappen durch hornförmige Stäbe erfolgt:
- J. N. Kudva, "Overview of the DARPA Smart Fixed Wing Project", Journal of Intelligent Material Systems and Structures, 15(4), 2004;
- Dietmar Müller, "Das Hornkonzept - Realisierung eines formvariablen Tragflügelprofils zur aerodynamischen. Leistungsoptimierung zukünftiger Verkehrsflugzeuge", Dissertation an der Fakultät Luft- und Raumfahrttechnik der Universität Stuttgart, 2000;
- S. C. Roberts, D. Stewart, V. Boaz, G. Bryant, L. Mertaugh, G. Wells, M. Gaddis, "XV-11 A Description and Preliminary Flight Test", Aerophysics Research Report No. 75, USAAVLABS Technical Report 67-21, 1967;
- US 4,286,671

Die Druckschriften EP 1 755 946 A1, DE 10 2004 045 651 A1, DE 10 2005 027 749 A1, DE 36 42 558 A1, EP 0 177 979 A1, EP 0 130 983 A1, US 4475702 A1, US 4706913 A1, EP 1 398 269 A1, US 4,351, 502 A1, DE 28 15 142 A1, GB 2186849 A, US 6,076,776 A, DE 197 07 392 A1, DE 29 07 912 A1 und DE 103 04 530 A1 betreffen sogenannte "Droop Nose Concepts", während eine selektiv verformbare Außenhaut insbesondere in den Druckschriften DE 10 2004 056 649 A1, US 2006 0145031 A1, US 2005 151 015 A1 beschrieben ist.

Schließlich hat sich herausgestellt, dass die gemäß dem Stand der Technik eingesetzte Betätigungsmechanik zum Ausfahren von Klappen aufwändig ist und Stößel, Schwenkhebel und ähnliches erfordert, die in der Regel einen Vorder- oder Hinterholm des aerodynamischen Bauteils an einem Durchstoßpunkt durchsetzen. Die Durchstoßpunkte müssen aufwändig konstruktiv verstärkt und abgedichtet werden, da die Holme einerseits zu den Haupttragelementen des aerodynamischen Bauteils zählen und andererseits beispielsweise einen Tank begrenzen können. Stand der Technik zu aerodynamischen Bauteilen mit verformbarer Außenhaut ist aus EP 0 836 988 A1 welche als nächstliegender Stand der Technik angesehen wird und alle Merkmale des Oberbegriffes des Anspruchs 1 offenbart, sowie, WO 85/00573 und EP 1 661 805 A1 bekannt.

### AUFGABE DER ERFINDUNG

Der Erfindung liegt die Aufgabe zugrunde, ein aerodynamisches Bauteil mit verformbarer Außenhaut vorzuschlagen, welches eine modifizierte Betätigungseinrichtung besitzt. Hierbei soll insbesondere eine zuverlässige Abstützung der Außenhaut an Abstützelementen und eine exakte Vorgabe des veränderbaren Querschnitts der Außenhaut gewährleistet sein.

### LÖSUNG

Die Aufgabe der Erfindung wird erfindungsgemäß mit den Merkmalen des unabhängigen Patentanspruchs 1 gelöst. Weitere Ausgestaltungen der erfindungsgemäßen Lösungen ergeben sich entsprechend den Merkmalen der abhängigen Patentansprüche 2 bis 15.

### BESCHREIBUNG DER ERFINDUNG

Die Erfindung betrifft ein beliebiges aerodynamisches Bauteil, insbesondere einen Tragflügel, eine Landeklappe, ein Höhen- oder Seitenleitwerk, dessen Kontur zur Beeinflussung der Aerodynamik veränderbar sein soll. Das erfindungsgemäße aerodynamische Bauteil besitzt eine Außenhaut, die verformbar ist, wobei diese Verformung durch eine plastische oder elastische Verformung erfolgen kann. Hierbei kann die Außenhaut beliebig ausgebildet sein, beispielsweise mit einer oder mehreren Schichten gleicher oder veränderlicher Dicke, Verbundkörpern, einer über innere Streben abgestützten Außenschicht und ähnliches. Weiterhin ist erfindungsgemäß die Außenhaut über Abstützelemente abgestützt. Diese können die Tragfähigkeit der Außenhaut unter den wirkenden statischen und/oder dynamischen, insbesondere aerodynamischen Kräften, erhöhen.

Andererseits besitzen zumindest einige der Abstützelemente für die erfindungsgemäße Ausgestaltung die Funktion, Kräfte auf die Außenhaut aufzubringen, die für die Verformung derselben verantwortlich sind. Damit sind diese Abstützelemente multifunktional ausgebildet, indem diese einerseits die Außenhaut in einer einmal herbeigeführten Querschnittskontur halten und andererseits einer Veränderung dieser Kontur mit einer Verformung der Außenhaut dienen.

Erfindungsgemäß ist ein Antriebsaggregat vorgesehen, über welches ein die verformbare Außenhaut abstützendes Abstützelement verdrehbar ist. Dieses Antriebsaggregat kann beliebig ausgebildet sein, beispielsweise als hydraulischer Antrieb oder elektromotorischer Antrieb. Auch kann ein beliebiger Übertragungsmechanismus, insbesondere ein hydraulisches oder mechanisches Getriebe, in dem Antriebsaggregat eingesetzt sein.

Erfindungsgemäß ist ein Abstand eines Abstützbereichs der verformbaren Außenhaut an dem durch das Antriebsaggregat verdrehten Abstützelement von einer Längsebene des aerodynamischen Bauteils veränderbar. Hierbei umfasst der Abstützbereich lediglich eine lokale Abstützung der Außenhaut an dem Abstützelement oder aber auch eine klein- oder großflächige Abstützung, insbesondere mit einer Erstreckung des "Abstützbereichs" sowohl in Richtung der Längsachse des Bauteils als auch in Richtung der Umströmung des aerodynamischen Bauteils. Die erfindungsgemäße Veränderung des Abstandes erfolgt mit einer Verdrehung des Abstützelements durch das Antriebsaggregat.

Entsprechend der Veränderung des Abstandes des Abstützbereichs der verformbaren Außenhaut an dem durch das Antriebsaggregat verdrehten Abstützelement von der Längsachse des aerodynamischen Bauteils ist eine Verformung der Außenhaut herbeiführbar. Die Verdrehung des Abstützelementes erzeugt somit eine auf eine Verformung der Außenhaut ausgerichtete Verformungskraft. Der Kraftfluss verläuft hier von dem Antriebsaggregat über das verdrehbare Abstützelement über den Abstützbereich zu der verformbaren Außenhaut. Im Gegensatz zu dem eingangs genannten Stand der Technik ist zwischen das von dem Antriebsaggregat verdrehten Abstützelement und der Außenhaut keine weitere Mechanik wie Hebel, Stößel, Gelenke und ähnliches zwischengeschaltet - vielmehr ist das Abstützelement unmittelbar an der Außenhaut abgestützt.

Erfindungsgemäß ist das Abstützelement als Hohlkörper ausgebildet und das Antriebsaggregat ist in dem Abstützelement abgeordnet, wodurch sich ein kompakter Aufbau ergibt.

Durchaus möglich ist, dass die Rotationsachse des Abstützelements entlang der Längsachse des aerodynamischen Bauteils orientiert ist, wobei mehrere Antriebsaggregate mit zugeordneten verdrehten Abstützelementen über die Längsachse des aerodynamischen Bauteils verteilt angeordnet sind. Auch denkbar ist, dass mehrere Abstützelemente, die über die Längsachse des aerodynamischen Bauteils verteilt angeordnet sind, über ein gemeinsames Antriebsaggregat angetrieben werden. Für eine besondere Ausgestaltung der Erfindung ist allerdings das die Außenhaut abstützende Abstützelement von dem Antriebsaggregat um ein in Anströmrichtung orientierte bzw. quer zur Längsachse des aerodynamischen Bauteils orientierte Rotationsachse verdrehbar. Damit wirkt das Abstützelement lediglich in einem Teillängsbereich des aerodynamischen Bauteils. Für den Fall, dass das Abstützelement und das Antriebsaggregat koaxial zueinander angeordnet sind, kann für die Unterbringung einer derartigen Einheit die Erstreckung des aerodynamischen Bauteils in Anströmrichtung genutzt werden, wobei auch eine vergrößerte Erstreckung des aerodynamischen Bauteils in Höhenrichtung mit zunehmendem Abstand von einer Vorder- oder Hinterkante für die Unterbringung der Einheit, insbesondere des Antriebsaggregates, genutzt werden kann.

Für eine im Folgenden als "erste Variante" bezeichnete Ausgestaltung ist mit einer Verdrehung des Abstützelementes der Abstützbereich der Außenhaut an dem Abstützelement entlang der Außenhaut veränderbar - das Abstützelement "wandert" somit entlang der Außenhaut, wobei sich mit dieser Bewegung der eingangs genannte Abstand des Abstützbereiches von der Längsachse des aerodynamischen Bauteils verändert, so dass mit dieser "Wanderung" die Verformung der Außenhaut einhergeht.

Für eine im Folgenden als "zweite Variante" bezeichnete Ausführungsform ist das Abstützelement mit einer gekrümmten Mantelfläche gebildet, welche an der Außenhaut abwälzt, so dass sich mit der Verdrehung des Abstützelements der Abstützbereich entlang der Mantelfläche des Abstützelements verlagert.

Durchaus möglich ist, dass erfindungsgemäß lediglich ein Abstützbereich des Abstützelementes mit einer Oberseite des aerodynamischen Bauteils (oder einer Unterseite des aerodynamischen Bauteils) gebildet ist, so dass über das Abstützelement lediglich die Kontur der Oberseite (oder der Unterseite) des aerodynamischen Bauteils beeinflusst wird. Hierbei kann die andere Seite des aerodynamischen Bauteils unbeeinflusst bleiben, so dass sich eine Dicke des aerodynamischen Bauteils im Bereich des Abstützelements mit der Verdrehung des Abstützelements verändert. Ebenfalls möglich ist, dass eine Beeinflussung der anderen Seite des aerodynamischen Bauteils durch anderweitige Maßnahmen erfolgt. Eine besonders kompakte Ausgestaltung ergibt sich allerdings, wenn das Abstützelement sowohl mindestens einen Abstützbereich mit einer Oberseite des aerodynamischen Bauteils als auch mindestens einen Abstützbereich mit einer Unterseite des aerodynamischen Bauteils ausbildet, so dass mit einer Verdrehung des Abstützelementes eine Verformung der Außenhaut sowohl im Bereich der Oberseite als auch der Unterseite des aerodynamischen Bauteils erfolgen kann, wobei die beiden genannten Verformungen durch die Gestaltung des einzigen Abstützelementes, insbesondere die Formgebung der Mantelfläche, exakt miteinander korreliert werden können.

Während durchaus möglich ist, dass sich die zuvor genannte Mantelfläche des Abstützelementes lediglich über einen Teilumfang um die Rotationsachse des Abstützelementes erstreckt, ist in weiterer Ausgestaltung der Erfindung die Mantelfläche des Abstützelementes um die Rotationsachse umlaufend ausgebildet. Dies hat Vorteile für die Festigkeit des Abstützelementes, da dieses eine Art Ringstruktur bildet. Andererseits kann dann auch eine weitergehende Verschwenkung des Abstützelementes mit einem Wandern des Abstützbereiches entlang der Mantelfläche erfolgen.

Ist das Abstützelement lediglich ringartig ausgebildet, übt das Abstützelement mit der Verdrehung lediglich lokale Verformungskräfte auf die Außenhaut aus, aber keine Verformungskräfte über einen größeren Bereich in Richtung der Anströmung. Hier kann die Abstützung auch in Anströmrichtung bzw. Umströmungsrichtung vergrößert werden, wenn die Mantelfläche des Abstützelementes eine Erstreckung in Richtung der Rotationsachse besitzt und die Außenhaut somit über einen vergrößerten Bereich in Richtung der Rotationsachse bzw. in Richtung der Umströmung an dem Abstützelement anliegt.

In weiterer Ausgestaltung dieses Grundansatzes besitzt die Mantelfläche des Abstützelementes in Richtung der Rotationsachse einen Konturverlauf, der mit dem Konturverlauf der Oberseite und/oder der Unterseite des aerodynamischen Bauteils korreliert. Besitzt beispielsweise die Außenhaut eine konstante Dicke, gibt der Konturverlauf des Abstützelementes den Konturverlauf der Oberseite und/oder der Unterseite des aerodynamischen Bauteils wieder. Um den gewünschten Effekt der Verformung der Außenhaut herbeizuführen, besitzt die Mantelfläche des Abstützelementes in einem Querschnitt bei Schnittführung quer zur Rotationsachse eine Außenkontur, die von einer Kreiskontur abweicht. Insbesondere ist die Außenkontur nockenartig ausgebildet mit einem oder mehreren Berg(en) und Tal oder Tälern. Kommt mit dem Abwälzen des Abstützelementes an der Außenhaut der Abstützbereich in den Bereich eines Berges, wird die Außenhaut durch die nockenartige Gestaltung von der Rotationsachse weg gedrückt, so dass letztendlich die Oberseite des aerodynamischen Bauteils bzw. die Unterseite des aerodynamischen Bauteils nach außen gedrückt wird.

In weiterer Ausgestaltung der Erfindung sind mehrere verdrehbare Abstützelemente vorgesehen, die über die Längsachse des aerodynamischen Bauelements verteilt angeordnet sind. Hierbei können die mehreren verdrehbaren Abstützelemente einzeln jeweils über ein Antriebsaggregat angetrieben werden, in Teilgruppen von einem Antriebsaggregat angetrieben werden oder sämtlich gemeinsam von einem Antriebsaggregat angetrieben werden, ggf. unter Zwischenschaltung von Getriebeeinheiten zur Veränderung der Rotationswinkel und/oder Umlenkung der Antriebsachsen. Beispielsweise kann eine in Richtung der Längsachse des aerodynamischen Bauteils verlaufende Antriebswelle, insbesondere als Hohlwelle in Leichtbauweise, Einsatz finden, welche im Bereich der jeweiligen Abstützelemente ein Teller- oder Kegelrad trägt, über welche den Abstützelementen zugeordnete Gegen-Teller- oder Kegelräder angetrieben werden. Eine Variation der Drehwinkel der Abstützelemente kann bei Bedarf durch Veränderung der Zähnezahlen der Tellerräder erzielt werden. Alternativ kann beispielsweise eine axial in Längsrichtung des aerodynamischen Bauelements von einem einzigen Antrieb verschobene Zahnstange mit Zahnrädern kämmen, die jeweils einen Abstützkörper verdrehen.

Möglich ist, dass die Abstände der verdrehbaren Abstützelemente so gewählt sind, dass in Zwischenräumen zwischen benachbarten Abstützelementen die Tragfähigkeit der Außenhaut auch ohne weitere Abstützelemente gewährleistet ist, so dass sich zwischen den Abstützelementen ein definierter Konturverlauf des aerodynamischen Bauteils ergibt. Ist hingegen eine derartige Tragfähigkeit der Außenhaut nicht gewährleistet, kann in weiterer Ausgestaltung der Erfindung zwischen benachbarten verdrehbaren Abstützelementen die Anordnung weiterer Abstützelemente erfolgen. Hierbei kann es sich beispielsweise um Pendelstützen handeln, also allein auf druck- oder zugbeanspruchte Streben, die in ihren Endbereichen beispielsweise an der Oberseite und der Unterseite des aerodynamischen Bauteils im Bereich der Außenhaut angebunden sind. Diese weiteren Abstützelemente stützen die Außenhaut ab, so dass eine wunschgemäße Verformung der Außenhaut, die durch die verdrehbaren Abstützelemente induziert ist, auch zwischen den benachbarten Abstützelementen gewährleistet ist. Eine derartige Ausgestaltung mit teilweiser Abstützung über verdrehbare Abstützelemente und teilweiser Abstützung über Pendelstützen kann zu einer Bauweise mit verringertem Gewicht, aber dennoch exakter Gewährleistung der gewünschten Konturen des aerodynamischen Bauteils mit der Verformung der Außenhaut genutzt werden.

Während grundsätzlich die Bildung der Außenhaut beliebig sein kann, hat es sich als vorteilhaft erwiesen, wenn die Außenhaut mit innen liegenden Stringern, insbesondere Omega-Stringern, gebildet ist. Diese haben grundsätzlich ihre Tauglichkeit zur Abstützung der Außenhaut von aerodynamischen Bauteilen bei geringem Gewicht nachgewiesen. Die Stringer können dann mindestens einen Kontaktpunkt der Außenhaut mit dem mindestens einen verdrehbaren Abstützelement ausbilden. Vorteilhaft hierbei ist, dass die von dem Abstützelement erzeugte Verformungskraft unter Zwischenschaltung der Stringer auf die äußere Schicht des aerodynamischen Bauteils, die unter Umständen eine geringere Festigkeit besitzt, übertragen wird, wobei über die Stringer eine großflächige Verteilung der Verformungskraft mit kleinen wirkenden aufgebrachten Spannungen erfolgen kann.

Für eine besondere konstruktive Ausgestaltung wird für die Unterbringung des Antriebsaggregats und des mindestens einen Abstützelements ein Zwischenraum oder eine Kammer genutzt, die zwischen einem Vorderholm und einer Vorderkante oder einem Hinterholm und einer Hinterkante des aerodynamischen Bauteils angeordnet ist. Hierbei kann erfindungsgemäß das Antriebsaggregat an dem ohnehin als Trageinheit dienenden Vorderholm oder Hinterholm abgestützt sein.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden: Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt ein aerodynamisches Bauteil, hier eine Prinzipskizze eines Teilbereichs eines Tragflügels, in räumlicher Darstellung.
- **Fig. 2**: zeigt einen vertikalen Längsschnitt durch ein erfindungsgemäßes aerodynamisches Bauteil in einer ersten Variante.
- **Fig. 3**: zeigt einen vertikalen Längsschnitt durch ein erfindungsgemäßes aerodynamisches Bauteil in einer zweiten Variante.
- **Fig. 4**: zeigt ein erfindungsgemäßes aerodynamisches Bauteil mit mehreren in Richtung der Längsachse beabstandet voneinander angeordneten verdrehbaren Abstützelementen.
- **Fig. 5**: zeigt Teilelemente eines erfindungsgemäßen aerodynamischen Bauteiles, hier ein Vorderholm mit hiervon getragenen Abstützelementen, die gegenüber der Rotationsachse eine gekrümmte Längsache besitzen, in einer Draufsicht, in einer Reiseflugkonfiguration.
- **Fig. 6**: zeigt Teilelemente eines erfindungsgemäßen aerodynamischen Bauteiles entsprechend Fig. 5, aber in einer Start- oder Landekonfiguration.

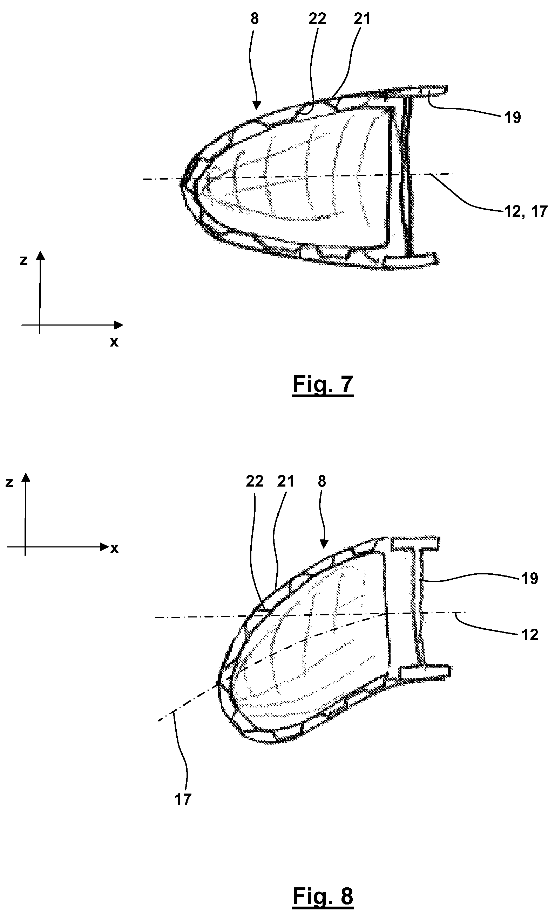

- **Fig. 7**: zeigt ein verdrehbares, von einem Vorderholm gehaltenes Abstützelement für ein erfindungsgemäßes aerodynamisches Bauteil in einem Querschnitt in einer Reiseflugkonfiguration.
- **Fig. 8**: zeigt das Abstützelement gemäß Fig. 7 in einer Start- oder Landekonfiguration.
- **Fig. 9**: zeigt einen Querschnitt durch ein erfindungsgemäßes aerodynamisches Bauteil in einem Zwischenbereich zwischen benachbarten Abstützelementen mit einer mit Omega-Stringern gebildeten Außenhaut und Abstützelementen in Form von Pendelstützen in einer Reiseflugkonfiguration.
- **Fig**.**10**: zeigt das aerodynamische Bauteil gemäß Fig. 9 in einer Start- oder Landekonfiguration.

### FIGURENBESCHREIBUNG

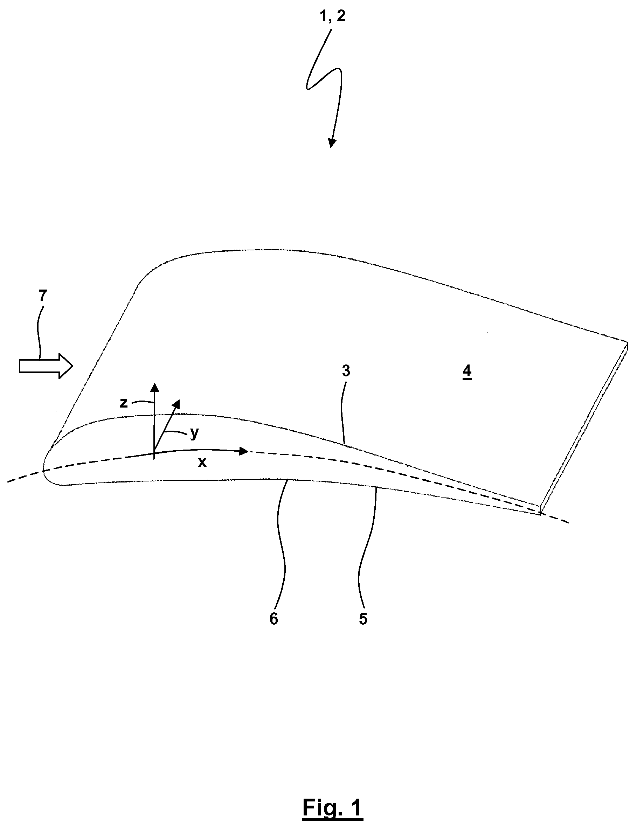

**Fig. 1** zeigt beispielhaft ein aerodynamisches Bauteil 1, welches als Tragflügel 2 ausgebildet ist. Ebenfalls Einsatz finden kann die Erfindung für beliebige anderweitige aerodynamische Bauteile, bei welchen für eine Veränderung der Umströmung des aerodynamischen Bauteils eine Kontur desselben betriebsbedingt geändert werden soll. Um lediglich einige Beispiel zu nennen, kann die Erfindung entsprechenden Einsatz finden für die Ausgestaltung einer Landeklappe, eines Höhe- und Seitenleitwerks und ähnliches.

Im Folgenden wird für die Beschreibung von Orientierungen und Geometrien das folgende Achsensystem verwendet: Mit y ist die Längsachse des Tragflügels beschrieben, während x eine Querachse beschreibt, entlang welcher sich eine Kontur 3 einer Oberseite 4 des Tragflügels 2 sowie eine Kontur 5 einer Unterseite 6 des Tragflügels 2 verändert. eine Längsebene, die für die Ausbildung des Bauteils 1 als Tragflügel 2 ungefähr horizontal ausgebildet ist, ist durch die Koordinaten x und y aufgespannt. Mit der Koordinate z ist für die Ausbildung des Tragflügels eine Höhenrichtung bezeichnet, so dass sich die Konturen 3, 5 als Funktionen z₃(x) = f₃(x) und z₅(x) = f₅(x) beschreiben lassen. Entsprechend bezeichnet ein vertikaler Längsschnitt einen Schnitt durch den Tragflügel 2 in einer Ebene y-z oder einer Ebene parallel zu dieser, während ein Querschnitt einen Schnitt durch eine Ebene x-z oder parallel zu dieser beschreibt. Der Fachmann weiß, dass für andere aerodynamische Bauteile als einen Tragflügel 2 wie dargestellt, beispielsweise für ein Seitenleitwerk, eine entsprechende Koordinatentransformation erforderlich ist, wobei beispielsweise für die Ausbildung als Seitenleitwerk die in Fig. 1 dargestellte Achse y nach oben orientiert ist. Weiterhin ist in Fig. 1 eine Anströmrichtung 7 gekennzeichnet, in welcher das aerodynamische Bauteil 1 angeströmt wird mit sich ergebender, möglichst laminarer Umströmung der Konturen 3, 5 der Oberseite 4 und der Unterseite 6. Die Anströmrichtung 7 stimmt ungefähr überein mit der Querachse x, wobei sich je nach Flugbedingungen des aerodynamischen Bauteils 1, beispielsweise in einem Steig- oder Sinkflug, während des Starts oder während der Landung oder während eines Kurvenflugs, ein spitzer Winkel zwischen der Anströmrichtung 7 und der Querachse x ergeben kann.

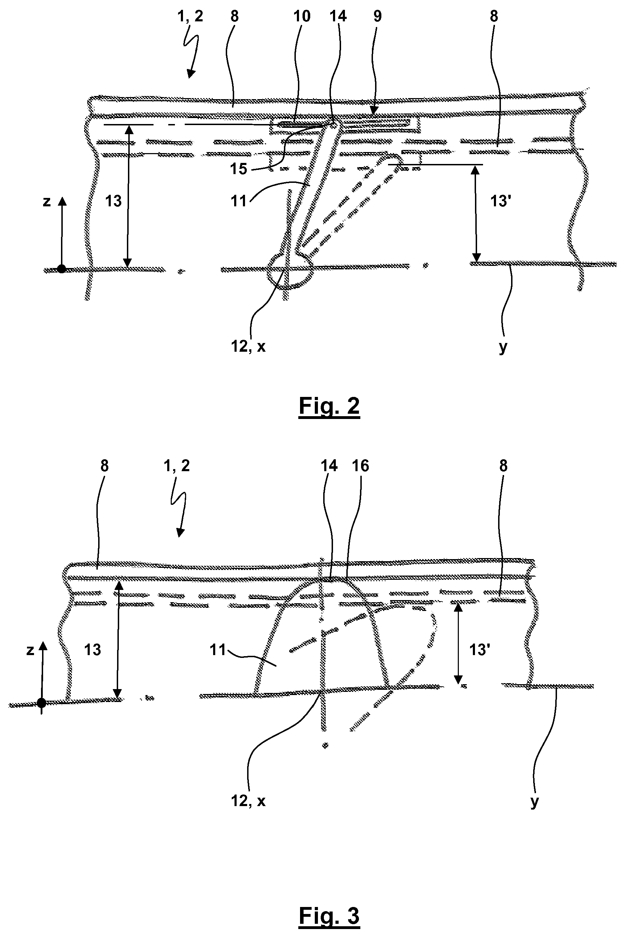

**Fig. 2** zeigt einen erfindungsgemäßen Tragflügel 2 entsprechend einer "ersten Variante" in einem Längsschnitt. Der Tragflügel 2 ist mit einer Außenhaut 8 gebildet, mit der die Oberseite 4 des Tragflügels 2 gebildet ist. Innen liegend besitzt die Außenhaut 8 eine Führungseinheit 9, die für das dargestellte Ausführungsbeispiel als Führungsschiene mit einer Langnut 10 ausgebildet ist. Mit der Führungseinheit 9 steht ein Abstützelement 11 derart in Wechselwirkung, dass über eine Verdrehung des Abstützelements 11 um eine Rotationsachse 12, die senkrecht zur Längsachse y und zu der Zeichenebene gemäß Fig. 2 orientiert ist sowie ungefähr koaxial zur Querachse x orientiert ist, ein Abstand 13 eines Abstützbereiches 14 zwischen Abstützelement 11 und Außenhaut 8 zu der Längsebene x-y zu einem veränderten Abstand 13' verändert werden, was mit einer Veränderung der Kontur 3 einhergeht. Für das in Fig. 2 dargestellte Ausführungsbeispiel ist der Abstützbereich gebildet mit dem Kontakt- oder Wirkverbindungsbereich zwischen der Führungseinheit 9 und dem Abstützelement 11, beispielsweise mit einem Führungspin 15, der von dem Abstützelement 11 getragen ist, parallel zur Rotationsachse 12 orientiert ist, und in die Langnut 10 der Führungseinheit 9 eingreift mit einem Verschiebe-Freiheitsgrad entlang der Langnut 10 parallel zur Längsachse y. Vereinfacht gesagt ist mit dem um die Rotationsachse 12 verdrehbaren Abstützelement 11 und der Führungseinheit 9 eine Art "Kurbeltrieb" gebildet, wobei eine Verdrehung des Abstützelementes 11 maximal zwischen einer 12-Uhr-Stellung und einer 3-Uhr-Stellung, vorzugsweise aber lediglich über einen kleineren Stellwinkel, erfolgen wird. In Fig. 2 ist eine Ausgangsstellung der Außenhaut 8 mit durchgezogenen Linien dargestellt, während eine über die Verdrehung des Abstützelementes 11 herbeiführbare veränderte Kontur 3 der Außenhaut 8 zusätzlich gestrichelt dargestellt ist. Entsprechend kann eine Veränderung der Kontur 5 auf der Unterseite 6 des Tragflügels 2 erfolgen, wozu ein zusätzliches separat oder gemeinsam mit dem dargestellten Abstützelement 11 verdrehtes Abstützelement Einsatz finden kann. Ebenfalls möglich ist, dass das Abstützelement 11 einstückig mit einem in Fig. 2 nicht dargestellten zusätzlichen Arm ausgestattet ist, welcher sich von der Rotationsachse 12 nach unten erstreckt und hier mit der Außenhaut 8 an der Unterseite 6 des Tragflügels 2 in Wirkverbindung tritt. Für die dargestellte Ausführungsform kann über den Kontakt zwischen Führungspin 15 und Langnut 10 der Führungseinheit 9 eine sowohl nach oben als auch nach unten gerichtete Kraft auf die Außenhaut 8 übertragen werden. Beliebige anderweitige Ausgestaltungen eines geeigneten Abstützbereiches 14 zwischen Abstützelement 11 und Außenhaut 8 sind möglich. Unter Umständen ist es ausreichend, wenn das Abstützelement 11 lediglich an der Außenhaut 8 einseitig unter Bildung eines Gleitkontaktes anliegt. Eine Anpressung der Außenhaut 8 an das Abstützelement 11 kann dann durch die elastische Vorspannung der Außenhaut 8 erfolgen und/oder durch die Umströmung des Tragflügels 2 bewirkt werden. Unter einem "Abstützbereich" 14 wird hierbei auch ein Punkt ohne signifikante Flächenerstreckung verstanden oder auch eine mehr oder weniger große Abstützfläche, die vorzugsweise so groß dimensioniert ist, dass die im Flugbetrieb und für die Beeinflussung der Konturen 3, 5 entstehenden Flächenpressungen zulässige Maximalwerte nicht überschreiten. Weiterhin kann der "Abstützbereich" 14 eine gewisse Längserstreckung parallel zur Rotationsachse 12 besitzen, wobei auch möglich ist, dass ein derartiger Abstützbereich im Querschnitt variierenden Abstand von der Rotationsachse 12 besitzt.

**Fig. 3** zeigt eine weitere Ausgestaltung der Erfindung, welche auch als "zweite Variante" bezeichnet ist. Während gemäß Fig. 2 das Abstützelement 11 in einer ersten Näherung als Art Hebel ausgebildet war, findet gemäß Fig. 3 ein Abstützelement 11 Einsatz, welches eine gekrümmte Mantelfläche 16 besitzt, an welcher die Außenhaut 8 anliegt. Mit einer Verdrehung des Abstützelements 11 wandert der zwischen der Mantelfläche 16 und der Außenhaut 8 ausgebildete Abstützbereich 14 entlang der Mantelfläche 16 mit einer Gleitbewegung zwischen Außenhaut 8 und Mantelfläche 16. Durch Vorgabe der Kontur der Mantelfläche 16 kann die Abhängigkeit der Veränderung des Abstandes 13 von dem Drehwinkel des Abstützelements 11 um die Rotationsachse 12 beeinflusst werden. Gemäß dem in Fig. 3 dargestellten Ausführungsbeispiel ergibt sich infolge des Gleitkontakts zwischen Außenhaut 8 und Abstützelement 11 eine Verlagerung des Abstützbereiches 14 mit der Verdrehung des Abstützelementes 11 sowohl an der Außenhaut 8 als auch auf der Mantelfläche 16. Es versteht sich, dass die Mantelfläche 16 auch eine Erstreckung vertikal zur Zeichenebene gemäß Fig. 3 besitzen kann, so dass der Abstützbereich 14 nicht lediglich in dem dargestellten vertikalen Längsschnitt existieren kann, sondern der Kontur 3 der Außenhaut 8 folgen kann. Wie für das Ausführungsbeispiel gemäß Fig. 2 können entsprechende Abstützelemente mit der Außenhaut 8 im Bereich der Unterseite 6 zusammenwirken. Ebenfalls möglich ist, dass sich die Mantelfläche 16 bis zu der Außenhaut im Bereich der Unterseite 6 erstreckt, so dass mit einer Verdrehung des Abstützelementes 11 sowohl ein Abstützbereich 14 zwischen Abstützelement 11 und Außenhaut 8 im Bereich der Oberseite 4 als auch ein weiterer Abstützbereich entsprechend im Bereich der Unterseite 6 seinen Abstand 13 von der Längsachse y verändern kann. Auch für dieses Ausführungsbeispiel kann eine Anpresskraft zwischen Abstützelement 11 und Außenhaut 8 erzeugt werden durch eine elastische Ausbildung der Außenhaut 8, elastische Zugelemente und/oder die Umströmung des Tragflügels 2.

Das Abstützelement 11 kann in erster Näherung mit einer Art "Nocken" verglichen werden. Während für die dargestellten Ausführungsbeispiele die erfindungsgemäßen Maßnahmen für den Einsatz im Vorderbereich oder Nasenbereich des Tragflügels 2 dargestellt sind, versteht es sich, dass ein Einsatz an beliebigem Ort entlang der Querachse x möglich ist, also auch beispielsweise im Mittenbereich oder im Bereich einer Hinterkante.

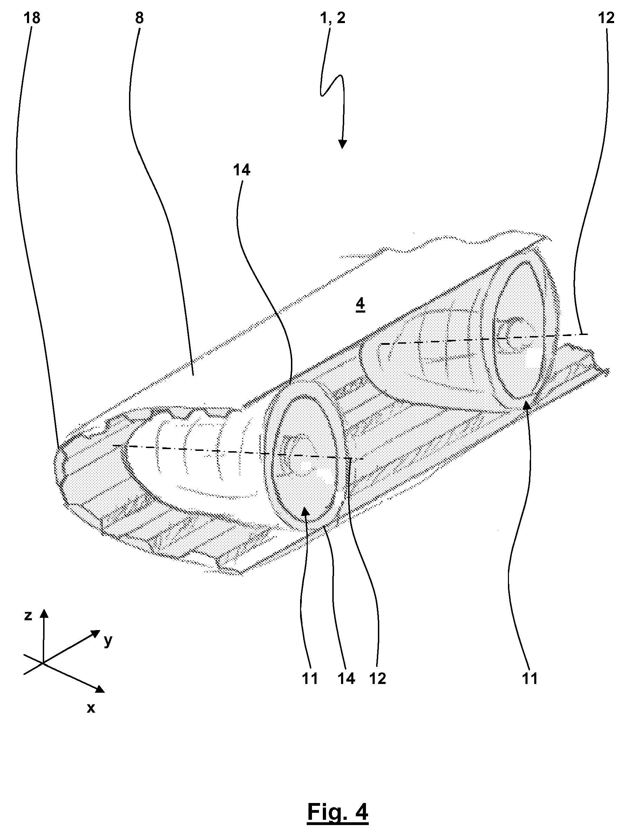

**Fig. 4** zeigt eine gegenüber den stark schematischen Darstellungen gemäß Fig. 2 und 3 konstruktiv detailliertere Ausführungsform der Erfindung. Hier finden über die Längsachse y des Tragflügels 2 verteilt mehrere Abstützelemente 11 Einsatz, hier zwei Abstützelemente 11. Die Abstützelemente 11 sind jeweils verdrehbar um Rotationsachsen 12, die ungefähr quer zur Längsachse y, parallel zueinander und ungefähr koaxial zur Anströmrichtung 7 orientiert sind. Die Abstützelemente besitzen eine gekrümmte Längsachse 17 und eine in Umfangsrichtung um diese Längsachse 17 geschlossene Mantelfläche 16, deren Abstand von der Längsachse 17 in Richtung einer Vorderkante 18 des Tragflügels 2 abnimmt. Beispielsweise kann die Längsachse 17 in einer liegend Ebene gekrümmt sein, und die Mantelfläche 16 ist rotationssymmetrisch zu der gekrümmten Längsachse 17 ausgebildet, beispielsweise mit einer Art parabelförmigem Konturverlauf. Selbstverständlich sind beliebige anderweitige Konturgestaltungen ebenfalls möglich.

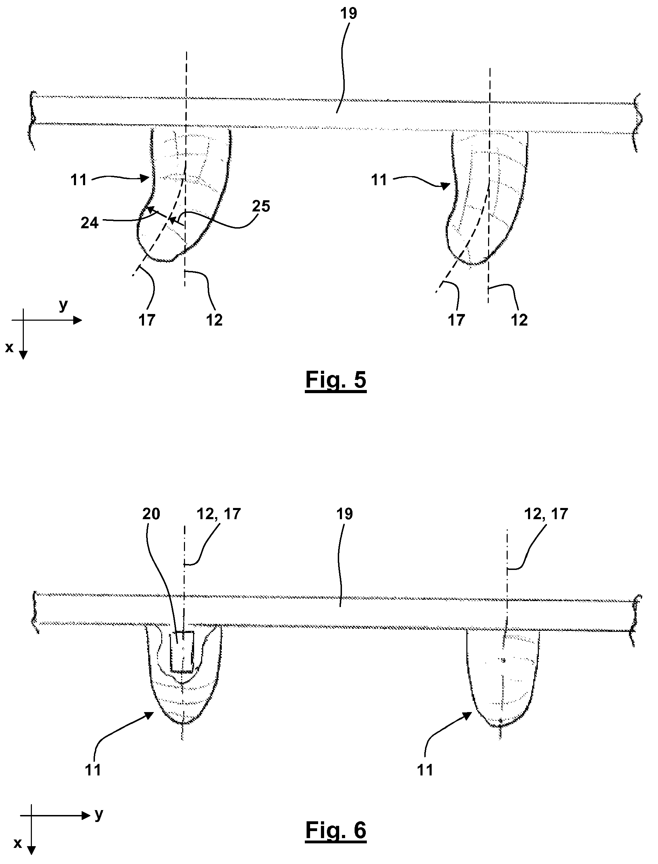

**Fig. 4** **und** **5** zeigen den Tragflügel 2 in einer Reiseflugkonfiguration, in welcher die gekrümmte Längsachse 17 in einer Ebene liegt, die parallel zu der x-y-Ebene orientiert ist. Diese Orientierung hat zur Folge, dass die Abstützelemente 11 Abstützbereiche 14 mit der Außenhaut 8 ausbilden, deren Abstand 13 von der Längsachse dem Abstand der Mantelfläche 16 des Abstützelements 11 von der gekrümmten Längsachse 17 entspricht. Damit hat die Krümmung der Längsachse 17 in dieser Stellung keinen Einfluss auf den Abstand der Außenhaut 8 von der Längsachse des Tragflügels 2.

Wird hingegen das Abstützelement 11 aus eine derartigen Betriebsstellung verdreht (Fig. 6), drückt die gekrümmte Längsachse 17 die Außenhaut 8 nach oben oder unten, wobei sich dann ein Abstand der Außenhaut von der Längsebene des Tragflügels ergibt, der sich aus der Summe des Abstandes der Mantelfläche 16 von der gekrümmten Längsachse 17 und der Verschiebung der Längsachse 17 infolge der Krümmung gegenüber der Rotationsachse 12 ergibt. Da die Abstützelemente 11 gemäß Fig. 4 bis 6 eine in Umfangsrichtung um die Längsachse 17 geschlossene Mantelfläche 16 besitzen, können diese sowohl einen Abstützbereich 14 mit der Außenhaut 8 auf der Oberseite 4 als auch einen Abstützbereich 14 der Außenhaut 8 im Bereich der Unterseite 6 des Tragflügels 2 ausbilden. Eine Verdrehung der Abstützelemente 11 führt somit zu einer Verlagerung der Außenhaut 8 sowohl im Bereich der Oberseite 4 als auch der Unterseite 6, so dass eine Beeinflussung der Konturen 3, 5 mit einer einzigen Drehbewegung herbeigeführt werden kann. Im Extremfall kann eine Verdrehung der Längsachse 17 maximal um 90° erfolgen, so dass in der in Fig. 6 dargestellten Betriebsstellung, welche beispielsweise eine Start- oder Landekonfiguration ist, die gekrümmte Längsachse 17 vollständig in der x-z-Ebene liegt.

Prinzipiell eröffnet somit die Erfindung folgende Möglichkeiten:
a) Die Längsachse 17 kann nicht gekrümmt ausgebildet sein, aber die Kontur der Mantelfläche 16 ist nicht kreisrund in einem y-z-Schnitt. Damit folgt die Verformung der Außenhaut 8 mit der Verdrehung des Abstützelements 11 dem veränderlichen radialen Abstand 24 der Mantelfläche des Abstützelementes 11 von der Längsachse 17 und Rotationsachse 12. Je nach Kontur der unrunden Mantelfläche 16 im y-z-Schnitt kann sich mit einer Verdrehung des Abstützelements 11 eine konstanter oder veränderlicher Abstand der Konturen 3, 5 ergeben.
b) Die Längsachse 17 ist gekrümmt ausgebildet, aber die Mantelfläche 16 ist im y-z-Schnitt kreisrund um die gekrümmte Längsachse 17 ausgebildet. In diesem Fall folgt die Verformung der Außenhaut 8 mit der Verdrehung des Abstützelements einer trigonometrischen Funktion des Drehwinkel multipliziert mit dem Abstand 25 der gekrümmten Längsachse 17 von der Rotationsachse 12. Hierbei bleibt infolge der kreisrunden Ausbildung der Mantelfläche 16 der Abstand der Konturen 3, 5 über die Verdrehung gleich.
c) Eine Überlagerung der Möglichkeiten a) und b) ist ebenfalls möglich, also eine Ausgestaltung der Mantelfläche 16 unrund zu einer gekrümmten Längsachse 17.

In Fig. 5 und 6 ist ergänzend zu erkennen, dass das Abstützelement 11 zwischen einer Vorderkante 18 und einem Vorderholm 19 angeordnet ist. Für das dargestellte Ausführungsbeispiel stützt sich das Abstützelement 11 an dem Vorderholm 19 ab. Weiterhin ist in dem Teilschnitt eines Abstützelements 11 gemäß Fig. 6 zu erkennen, dass für die erfindungsgemäße Ausführungsform ein Antriebsaggregat 20 in dem als Hohlkörper ausgebildeten Abstützelement 11 angeordnet ist, wodurch sich eine besonders kompakte Ausgestaltung ergibt. Hierbei kann das Antriebsaggregat 20 ebenfalls von dem Vorderholm 19 getragen und an diesem abgestützt sein, wobei auch eine Zuführung einer beispielsweise elektrischen Antriebsleitung über den Vorderholm 19 mit gegenüber dem Vorderholm 19 abgestützten und unter Umständen in diesem geführten Leitungen erfolgen kann.

Für das in Fig. 4 dargestellte Ausführungsbeispiel ist die Außenhaut 8 als Verbundkörper ausgebildet mit einer Außenschicht 21, die die Konturen 3, 5 sowie die Oberseite 4 und die Unterseite 6 bildet. Die Außenschicht 21 stützt sich an Omega-Stringern 22 oder anderweitigen Streben ab, die vorzugsweise in Richtung der Längsachse y des Tragflügels 2 orientiert sind. Die Außenhaut 8 ist mit der Außenschicht 21 und den Omega-Stringern 22 als eine Art Verbundkörper ausgebildet. Ein Gleitkontakt ist in diesem Fall gebildet zwischen der Mantelfläche 16 der Abstützelemente 11 und den innen liegenden Gleitflächen der Omega-Stringer 22, so dass die Gleitflächen entlang der Mantelfläche 16 immer wieder durchbrochen sind von Ausnehmungen zwischen benachbarten Omega-Stringern 22.

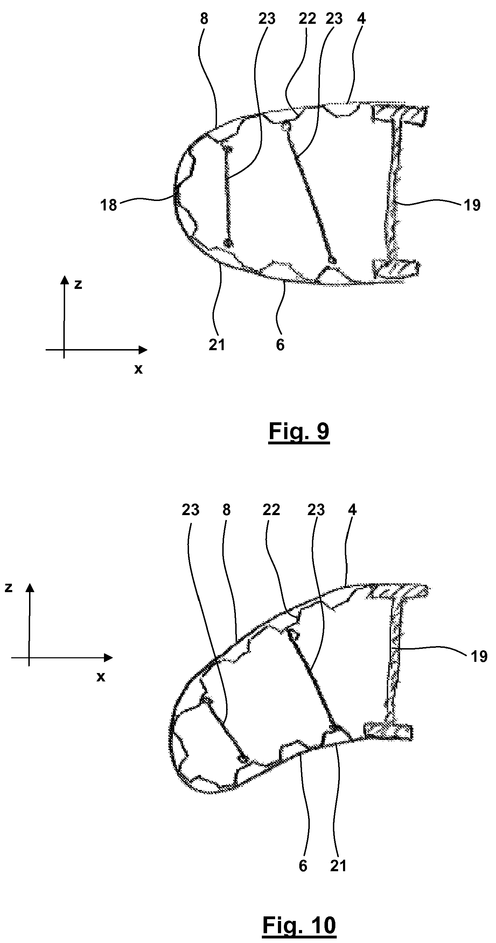

Für das in Fig. 4 dargestellte Ausführungsbeispiel ist der Zwischenraum zwischen den benachbarten Abstützelementen 11 leer, so dass sich ein Hohlraum ergibt. In diesem Fall muss die Außenhaut 8 hinreichend steif sein, so dass sich keine Aus- oder Einbeulungen der Außenhaut 8 zwischen den Abstützelementen 11 ergeben. Für den Fall, dass eine verhältnismäßig weiche Außenhaut 8 Einsatz finden soll und/oder der Abstand der Abstützelemente 11 aus Leichtbaugründen vergrößert werden soll, ist es vorteilhaft, wenn gemäß Fig. 9 und 10 zwischen den Abstützelementen 11, die verdrehbar sind und über die eine Beeinflussung der Konturen 3, 5 erfolgen soll, zusätzliche Abstützelemente 23 angeordnet sind, welche dafür Sorge tragen, dass ohne Aus- oder Einbeulungen der Außenhaut 8 die Kontur des Tragflügels 2 einer durch die verdrehbaren Abstützelemente 11 vorgegebenen Sollkontur entspricht. Für das in Fig. 9 und 10 dargestellte Ausführungsbeispiel sind die Abstützelemente 23 als Pendelstützen ausgebildet, die sich zwischen der Ober- und Unterseite 4 und 6 erstrecken und gelenkig in ihren Endbereichen an den Omega-Stringern 22 angelenkt sind. Diese sollen vorzugsweise nicht die Beeinflussung der Kontur durch die Verdrehung der Abstützelemente 11 beeinträchtigen, aber dafür sorgen, dass sich die Sollkontur ergibt. Selbstverständlich sind beliebige anderweitige Abstützelemente 23 zwischen den verdrehbaren Abstützelementen 11 alternativ einsetzbar.

Für die Ausbildung eines geeigneten Gleitkontaktes zwischen den Abstützelementen 11 und der Außenhaut 8 können an sich bekannte Maßnahmen Einsatz finden. Insbesondere kann eine besondere Gleitbeschichtung der Omega-Stringer 22 und/oder der Mantelfläche 16 Einsatz finden.

Die vorliegende Erfindung stellt eine formvariable Außenhaut 8 bereit, die insbesondere in den relevanten Teilbereichen trotz der Ermöglichung der Veränderung der Konturen 3, 5 spaltfrei ausgebildet ist. Durch die Verdrehung des Abstützelements 11 kann beispielsweise eine Flügelvorderkante beim Start und bei der Landung abgesenkt werden. Hierzu ist die Außenhaut 8 vorzugsweise mit einem Faserverbundmaterial gebildet, welches die Verformungen infolge der Verdrehung der Abstützelemente ermöglicht, aber gleichzeitig eine hinreichende Formstabilität gewährleistet in Teilbereichen des Tragflügels 2, in welchen keine Abstützung durch die Abstützelemente 11 erfolgt. Das Anliegen des als Rotationskörper ausgebildeten Abstützelementes 11 an der über die Omega-Stringer 22 versteiften Außenhaut 8 über einen Teil oder die gesamten Konturen 3, 5 in dem Querschnitt kann zu einem besonders exakten Einhalten einer gewünschten Außenkontur führen. Erfindungsgemäß kann auch eine stufenlose Variation der Außenkontur des Tragflügels 2 mit einem stufenlosen Verdrehen der Abstützelemente ermöglicht werden. Die Krafteinleitung in die Außenhaut 8 kann im Querschnitt über das gesamte Profil erfolgen. Über die Omega-Stringer kann eine verbesserte Krafteinleitung in die Außenhaut 8 erfolgen. Möglich ist, dass, beispielsweise über eine in Richtung der Längsachse y des Tragflügels 2 verlaufende Zahnstange, über ein einziges Antriebsaggregat mehrere Abstützelemente 11 gemeinsam verdreht werden. Die Abstützelemente 11 können hierbei gleiche oder unterschiedliche Außenkonturen, insbesondere unterschiedliche Krümmungen der Längsachsen 17 und/oder unterschiedliche Durchmesser der Mantelfächen oder Unrundheiten derselben, besitzen.

Möglich ist, dass ein Massenausgleich für die verdrehbaren Abstützelemente 11 vorgesehen ist, so dass sich der Schwerpunkt der Abstützelemente mit Massenausgleich mit der Verdrehung der Abstützelemente nicht verlagert.

## Patentansprüche

1. Aerodynamisches Bauteil (1), insbesondere Tragflügel (2), Landeklappe, Höhen- oder Seitenleitwerk, mit
a) einer Außenhaut (8), die in einem Querschnitt bei Schnittführung entlang der Anströmrichtung (7) verformbar ist,
b) die Außenhaut (8) abstützenden Abstützelementen (11; 23), wobei
c) ein Antriebsaggregat (20) vorgesehen ist, über das ein die verformbare Außenhaut (8) abstützendes Abstützelement (11) verdrehbar ist,
d) mit einer Verdrehung des Abstützelements (11) durch das Antriebsaggregat (20) der Abstand (13) des Abstützbereichs (14) der verformbaren Außenhaut (8) an dem durch das Antriebsaggregat (20) verdrehten Abstützelement (11) von einer Längsebene des aerodynamischen Bauteils (1) veränderbar ist,
e) entsprechend der Veränderung des Abstandes (13) des Abstützbereichs (14) der verformbaren Außenhaut (8) an dem durch das Antriebsaggregat (20) verdrehten Abstützelement (11) von der Längsebene des aerodynamischen Bauteils (1) eine Verformung der Außenhaut (8) herbeiführbar ist und
**dadurch gekennzeichnet, dass**
f) das Abstützelement (11) als Hohlkörper ausgebildet ist und das Antriebsaggregat (20) in dem Abstützelement (11) angeordnet ist.

2. Aerodynamisches Bauteil (1) nach Anspruch 1, **dadurch gekennzeichnet, dass** das die Außenhaut (8) abstützende Abstützelement (11) von dem Antriebsaggregat (20) um eine in Anströmrichtung (7) orientierte Rotationsachse (12) verdrehbar ist.

3. Aerodynamisches Bauteil (1) nach Anspruch 1 oder 2, **dadurch gekennzeichnet, dass** mit der Verdrehung des Abstützelements (11) der Abstützbereich (14) der Außenhaut (8) an dem Abstützelement (11) entlang der Außenhaut (8) veränderbar ist.

4. Aerodynamisches Bauteil (1) nach Anspruch 1 oder 2, **dadurch gekennzeichnet, dass**
a) das Abstützelement (11) eine gekrümmte Mantelfläche (16) besitzt und
b) sich mit der Verdrehung des Abstützelements (11) der Abstützbereich (14) entlang der Mantelfläche (16) des Abstützelements (11) verlagert.

5. Aerodynamisches Bauteil (1) nach einem der vorhergehenden Ansprüche, **dadurch gekennzeichnet, dass** das Abstützelement (11)
a) mindestens einen Abstützbereich (14) mit einer Oberseite (4) des aerodynamischen Bauteils (1)und
b) mindestens einen Abstützbereich (14) mit einer Unterseite (6) des aerodynamischen Bauteils (1)
ausbildet.

6. Aerodynamisches Bauteil (1) nach Anspruch 4 oder 5 in Rückbeziehung auf Anspruch 4, **dadurch gekennzeichnet, dass** die Mantelfläche (16) des Abstützelements (11) um die Rotationsachse (12) umlaufend ausgebildet ist.

7. Aerodynamisches Bauteil (1) nach Anspruch 6, **dadurch gekennzeichnet, dass** die Mantelfläche (16) des Abstützelementes (11) eine Erstreckung in Richtung der Rotationsachse (12) besitzt.

8. Aerodynamisches Bauteil (1) nach Anspruch 7, **dadurch gekennzeichnet, dass** die Mantelfäche (16) des Abstützelementes (11) in Richtung der Rotationsachse (12) einen Konturverlauf besitzt, der mit dem Verlauf der Kontur (3; 5) der Oberseite (4) und/oder der Unterseite (6) des aerodynamischen Bauteils (1) korreliert.

9. Aerodynamisches Bauteil (1) nach einem der Ansprüche 4 bis 8, **dadurch gekennzeichnet, dass** die Mantelfläche (16) des Abstützelements (11) in einem Querschnitt mit Schnittführung quer zur Rotationsachse (12) eine Außenkontur besitzt, die von einer Kreiskontur abweicht, insbesondere nockenartig ausgebildet ist.

10. Aerodynamisches Bauteil (1) nach einem der vorhergehenden Ansprüche, **dadurch gekennzeichnet, dass** mehrere verdrehbare Abstützelemente (11) vorgesehen sind, die über die Längsachse (y) des aerodynamischen Bauelements (1) verteilt angeordnet sind.

11. Aerodynamisches Bauteil (1) nach Anspruch 10, **dadurch gekennzeichnet, dass** zwischen benachbarten verdrehbaren Abstützelementen (11) weitere Abstützelemente (23), insbesondere Pendelstützen, die Außenhaut (8) abstützen, welche eine durch die verdrehbaren Abstützelemente (11) induzierte Verformung der Außenhaut (8) auch zwischen den benachbarten Abstützelementen (11) gestatten.

12. Aerodynamisches Bauteil (1) nach einem der vorhergehenden Ansprüche, **dadurch gekennzeichnet, dass** die Außenhaut (8) mit innenliegenden Stringern, insbesondere Omega-Stringern (22), gebildet ist, die den mindestens einen Kontaktpunkt der Außenhaut (8) mit dem mindestens einen verdrehbaren Abstützelement (11) ausbilden.

13. Aerodynamisches Bauteil (1) nach einem der vorhergehenden Ansprüche, **dadurch gekennzeichnet, dass**
a) das Antriebsaggregat (20) und das mindestens eine Abstützelement (11) zwischen einem Vorderholm (19) und einer Vorderkante (18) des aerodynamischen Bauteils (1) angeordnet ist und
b) das Antriebsaggregat (20) an dem Vorderholm (19) abgestützt ist.

14. Aerodynamisches Bauteil (1) nach einem der vorhergehenden Ansprüche, **dadurch gekennzeichnet, dass** der Abstützbereich (14) zwischen verdrehbarem Anstützelement (11) und Außenhaut (8) mit einem Gleitkontakt gebildet ist.

15. Aerodynamisches Bauteil (1) nach einem der vorhergehenden Ansprüche, **dadurch gekennzeichnet, dass** das Abstützelement (11) eine um die Rotationsachse (12) geschlossene Mantelfläche (16) besitzt und eine gekrümmte Längsachse (17) besitzt.

## Claims

1. Aerodynamic construction element (1), especially wing (2), landing flap, elevator or vertical tail, comprising
a) an outer skin (8), which is deformable in a cross-section obtained when cutting along the instream direction (7),
b) supporting elements (11; 23) supporting the outer skin (8), where
c) a drive aggregate (20) is provided, by which a supporting element (11) supporting the deformable outer skin (8) is rotatable,
d) with a rotation of the supporting element (11) by the drive aggregate (20) the distance (13) of the supporting portion (14) of the deformable outer skin (8) on the supporting element (20) rotated by the drive aggregate (11) from a longitudinal plane of the aerodynamic construction element (1) may be changed,
e) correspondent to a change of the distance (13) of the supporting portion (14) of the deformable outer skin (8) on the supporting element (11) rotated by the drive aggregate (20) from the longitudinal plane of the aerodynamic construction element (1) a deformation of the outer skin (8) may be caused,
**characterised in that**
f) the supporting element (11) is realised as a hollow body and the drive aggregate (20) is placed within the supporting element (11).

2. Aerodynamic construction element (1) according to claim 1, **characterised in that** the supporting element (11) supporting the outer skin (8) is rotatable around a rotational axis (12) oriented in an instream direction (7) by the drive aggregate (20).

3. Aerodynamic construction element (1) according to claim 1 or 2, **characterised in that** by the rotation of the supporting element (11) the supporting portion (14) of the outer skin (8) on the supporting element (11) along the outer skin (8) may be changed.

4. Aerodynamic construction element (1) according to claim 1 or 2, **characterised in that**
a) the supporting element (11) has a curved outer surface (16) and
b) with the rotation of the supporting element (11) the supporting portion (14) is shifted along the outer surface (16) of the supporting element (11).

5. Aerodynamic construction element (1) according to one the preceding claims, **characterised in that** the supporting element (11) forms
a) at least one supporting portion (14) with an upper side (4) of the aerodynamic construction element (1) and
b) at least one supporting portion (14) with a lower side (6) of the aerodynamic construction element (1).

6. Aerodynamic construction element (1) according to claim 4 or 5 in dependency on claim 4, **characterised in that** the outer surface (16) of the supporting element (11) is continous in circumferential direction around the rotational axis (12).

7. Aerodynamic construction element (1) according to claim 6, **characterised in that** the outer surface (16) of the supporting element (11) has an extension in the direction of the rotational axis (12).

8. Aerodynamic construction element (1) according to claim 7, **characterised in that** the outer surface (16) of the supporting element (11) in the direction of the rotational axis (12) has a contour profile which correlates with the profile of the contour (3; 5) of the upper side (4) and/or of the lower side (6) of the aerodynamic construction element (1).

9. Aerodynamic construction element (1) according to one of the claims 4 to 8, **characterised in that** the outer surface (16) of the supporting element (11) in a cross-section obtained when cutting transverse to the rotational axis (12) has an outer contour which deviates from a circular contour, especially which is formed cam-like.

10. Aerodynamic construction element (1) according to one of the preceding claims, **characterised in that** several rotatable supporting elements (11) are provided which are distributed over the longitudinal axis (y) of the aerodynamic construction element (1).

11. Aerodynamic construction element (1) according to claim 10, **characterised in that** between neighbouring pivotable supporting elements (11) further supporting elements (23), especially hinged supports, support the outer skin (8), which allow for a deformation of the outer skin (8) induced by the rotatable supporting elements (11) even between the neighbouring supporting elements (11).

12. Aerodynamic construction element (1) according to one of the preceding claims, **characterised in that** the outer skin (8) is realised with interior stringers, especially omega stringers (22), which form the at least one contact point of the outer skin (8) with the at least one rotatable supporting element (11).

13. Aerodynamic construction element (1) according to one of the preceding claims, **characterised in that**
a) the drive aggregate (20) and the at least one supporting element (11) are located between a front strut (19) and a front edge (18) of the aerodynamic construction element (1) and
b) the drive aggregate (20) is supported on the front strut (19).

14. Aerodynamic construction element (1) according to one of the preceding claims, **characterised in that** the supporting portion (14) between the pivotable supporting element (11) and the outer skin (8) is formed with a sliding contact.

15. Aerodynamic construction element (1) according to one of the preceding claims, **characterised in that** the supporting element (11) has an outer surface (16) closed around the rotational axis (12) and a curved longitudinal axis (17).

## Revendications

1. Composant aérodynamique (1), en particulier aile portante (2), volet, empennage d'altitude ou dérive, ayant
a) une paroi extérieure (8) qui est déformable dans une section lors du guidage de la coupe le long de la direction d'afflux (7),
b) des éléments de support (11; 23) supportant la paroi extérieure (8),
c) étant entendu qu'il est prévu un groupe d'entraînement (20) au moyen duquel un élément de support (11) supportant la paroi extérieure (8) peut être mis en rotation,
d) la distance (13) de la zone de support (14) de la paroi extérieure déformable (8) au niveau de l'élément de support (11) mis en rotation par le groupe d'entraînement (20) par rapport à un plan longitudinal de la composant aérodynamique (1) pouvant être modifiée par une rotation de l'élément de support (11) exécutée par le groupe d'entraînement (20), et
e) une déformation de la paroi extérieure (8) pouvant être engendrée en fonction de la modification de la distance (13) de la zone de support (14) de la paroi extérieure déformable (8) au niveau de l'élément de support (11) mis en rotation par le groupe d'entraînement (20) par rapport au plan longitudinal du composant aérodynamique (1),
**caractérisé en ce que**
f) l'élément de support (11) est réalisé en tant que corps creux et le groupe d'entraînement (20) est agencé dans l'élément de support (11).

2. Composant aérodynamique (1) selon la revendication 1, **caractérisé en ce que** l'élément de support (11) supportant la paroi extérieure (8) peut être mis en rotation par le groupe d'entraînement (20) autour d'un axe de rotation (12) orienté dans la direction d'afflux (7).

3. Composant aérodynamique (1) selon la revendication 1 ou 2, **caractérisé en ce que** la zone de support (14) de la paroi extérieure (8) peut être modifiée au niveau de l'élément de support (11) le long de la paroi extérieure (8) par la rotation de l'élément de support (11).

4. Composant aérodynamique (1) selon la revendication 1 ou 2, **caractérisé en ce que**
a) l'élément de support (11) possède une surface d'enveloppe courbée (16) et
b) la zone de support (14) est décalée le long de la surface d'enveloppe (16) de l'élément de support (11) par la rotation de l'élément de support (11).

5. Composant aérodynamique (1) selon l'une des revendications précédentes, **caractérisé en ce que** l'élément de support (11) forme
a) au moins une zone de support (14) avec un côté supérieur (4) du composant aérodynamique (1) et
b) au moins une zone de support (14) avec un côté inférieur (6) du composant aérodynamique (1).

6. Composant aérodynamique (1) selon la revendication 4 ou 5 par référence à la revendication 4, **caractérisé en ce que** la surface d'enveloppe (16) de l'élément de support (11) est réalisée de façon circonférentielle autour de l'axe de rotation (12).

7. Composant aérodynamique (1) selon la revendication 6, **caractérisé en ce que** la surface d'enveloppe (16) de l'élément de support (11) possède une extension dans la direction de l'axe de rotation (12).

8. Composant aérodynamique (1) selon la revendication 7, **caractérisé en ce que** la surface d'enveloppe (16) de l'élément de support (11) possède, dans la direction de l'axe de rotation (12), un tracé de contour qui est en corrélation avec le tracé du contour (3 ; 5) du côté supérieur (4) et/ou du côté inférieur (6) du composant aérodynamique (1).

9. Composant aérodynamique (1) selon l'une des revendications 4 à 8, **caractérisé en ce que** la surface d'enveloppe (16) de l'élément de support (11) possède, dans une section avec un guidage de coupe transversal par rapport à l'axe de rotation (12), un contour extérieur qui diffère d'un contour circulaire, qui est en particulier réalisé à la manière d'une came.

10. Composant aérodynamique (1) selon l'une des revendications précédentes, **caractérisé en ce qu'**il est prévu plusieurs éléments de supports rotatifs (11), qui sont agencés de façon répartie sur l'axe longitudinal (y) du composant aérodynamique (1).

11. Composant aérodynamique (1) selon la revendication 10, **caractérisé en ce qu'**entre des éléments de support rotatifs (11) adjacents, des éléments de support (23) supplémentaires, en particulier des supports pendulaires, supportent la paroi extérieure (8), lesquels permettent également une déformation de la paroi extérieure (8) induite par les éléments de support rotatifs (11) entre les éléments de supports (11) adjacents.

12. Composant aérodynamique (1) selon l'une des revendications précédentes, **caractérisé en ce que** la paroi extérieure (8) est réalisée avec des raidisseurs situés à l'intérieur, en particulier des raidisseurs en oméga (22), qui forment l'au moins un point de contact de la paroi extérieure (8) avec l'au moins un élément de support rotatif (11).

13. Composant aérodynamique (1) selon l'une des revendications précédentes, **caractérisé en ce que**
a) le groupe d'entraînement (20) et l'au moins un élément de support (11) sont agencés entre un longeron avant (19) et un bord d'attaque (18) du composant aérodynamique (1) et
b) le groupe d'entraînement (20) prend appui sur le longeron avant (19).

14. Composant aérodynamique (1) selon l'une des revendications précédentes, **caractérisé en ce que** la zone de support (14) entre l'élément de support rotatif (11) et la paroi extérieure (8) est formée avec un contact glissant.

15. Composant aérodynamique (1) selon l'une des revendications précédentes, **caractérisé en ce que** l'élément de support (11) possède une surface d'enveloppe (16) fermée autour de l'axe de rotation (12) et un axe longitudinal courbé (17).
